(19) Europäisches Patentamt
European Patent Office
Office européen des brevets

(11) EP 1 507 663 B1

(12) EUROPEAN PATENT SPECIFICATION

(45) Date of publication and mention of the grant of the patent:
**21.04.2010 Bulletin 2010/16**

(21) Application number: **03730590.1**

(22) Date of filing: **22.05.2003**

(51) Int Cl.:
***B32B 27/36*** *(2006.01)*

(86) International application number:
**PCT/JP2003/006420**

(87) International publication number:
**WO 2003/099562 (04.12.2003 Gazette 2003/49)**

# (54) MULTILAYER STRETCHED PRODUCT

MEHRSCHICHTIGES, GESTRECKTES PRODUKT

PRODUIT MULTICOUCHE ORIENTE

(84) Designated Contracting States:
**AT BE BG CH CY CZ DE DK EE ES FI FR GB GR HU IE IT LI LU MC NL PT RO SE SI SK TR**

(30) Priority: **24.05.2002 JP 2002151077**
**21.01.2003 JP 2003012616**

(43) Date of publication of application:
**23.02.2005 Bulletin 2005/08**

(73) Proprietor: **Kureha Corporation**
**Tokyo 103-8552 (JP)**

(72) Inventors:
- **SATO, Hiroyuki**
  **Iwaki-Shi,**
  **Fukushima 974-8686 (JP)**
- **SUZUKI, Yoshinori**
  **Iwaki-Shi,**
  **Fukushima 974-8686 (JP)**
- **MIURA, Hiromitsu**
  **Tokyo 103-8552 (JP)**

(74) Representative: **de Lang, Robbert-Jan**
**Exter Polak & Charlouis B.V.**
**J.J. Viottastraat 31**
**1071 JP Amsterdam (NL)**

(56) References cited:
**EP-A- 0 806 283** **EP-A- 0 925 915**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[TECHNICAL FIELD]

The present invention relates to a formed product, such as a sheet, a film or a blow molded product having a multilayer structure including at least one layer of aliphatic co-polyester.

[BACKGROUND ART]

Aliphatic polyester resins, such as polyglycolic acid (PGA, including polyglicolide), polylactic acid (PLA), polytrimethylene carbonate (PTMC) and polycaprolactone (PCL), can be decomposed by microorganisms or enzymes present in nature, such as soil or sea water, because of aliphatic ester structure contained in their molecular chains, and are therefore noted as biodegradable polymer materials giving little load to the environment. Among them, polyglycolic acid is excellent in heat resistance, gas barrier property, mechanical strength, etc., and therefore the development of new use thereof has been proposed (US-A-5853639, US-A 6245437, EP-A 0925915 and EP-A-806283). EP 806283 discloses a mono layered stretch blow molded container formed from a resin material comprising an aliphatic polyester having a crystallisation temperature Tc1>96°c.

However, aliphatic polyester resins inclusive of the polyglycolic acid are generally crystallizable, have a crystallization temperature and a melting temperature which are close to each other and do not necessarily have a sufficient heat stability, and the melt processing or stretching thereof has been encountered with some problems.

Moreover, aliphatic polyester resins are rich in hydrophilicity because of their ester bond, and a formed product having a surface layer capable of contacting moisture, if composed of such an aliphatic polyester resin, is liable to result in a lower strength. Accordingly, in some cases, it is desirable for an aliphatic polyester to be laminated with a more hydrophobic thermoplastic resin to provide a stretched product. In such a case, it becomes necessary to harmonize the thermal properties of the thermoplastic resin with those of the aliphatic polyester resin.

[DISCLOSURE OF INVENTION]

Accordingly, a principal object of the present invention is to provide a satisfactory multilayer stretched product of a laminate structure including at least one layer of aliphatic polyester resin with another thermoplastic resin layer.

According to the present invention, there is provided a multilayer stretched product, comprising:

> stretched layers including a layer of a glycolic acid copolymer (A) and a layer of a thermoplastic resin (B) directly laminated with the glycolic acid copolymer layer (A); wherein said aliphatic co-polyester(A) has a crystallization temperature Tc1 of at least. 96 °C , said crystallization temperature Tc1 being defined as a heat-evolution peak temperature due to crystallization detected in the course of heating from amorphous state at a temperature-raising rate of 10 °C/min. by means of a differential scanning calorimeter, and said thermoplastic resin(B) has a glass-transition temperature Tg which is lower than the Tc1, and in the lange of 64 to 120 ºC.

Some description is added regarding a history of our study with the above-mentioned object to reach the present invention.

We have made extensive study on the problematic factor during the forming of polyglycolic acid, as a representative of aliphatic polyester resin, i.e., the closeness of the crystallization temperature and the melting temperature. As a result, we have got a knowledge that a heat-treatment (or a provision of thermal history) of polyglycolic acid at a temperature (thermal history temperature) substantially higher than the melting temperature result in reforming effects desirable for the thermal forming of polyglycolic acid, i.e., an increase in crystallization temperature Tc1 in the course of heating from an amorphous state and a decrease in crystallization temperature Tc2 in the course of cooling from a molten state, and based on the knowledge, we have proposed an improved forming process for polyglycolic acid(Japanese Patent Application 2002-0007839). The present invention provides an improvement in the above-mentioned forming process. Mo.re specifically, we have found that among such aliphatic polyester resins, an aliphatic co-polyester can acquire an effective increase in Tc1 through heat treatment at a relatively low thermal history temperature to be provided with a preferable temperature relationship with the Tg of another thermoplastic resin to be laminated therewith, thus allowing a smooth co-stretching of the laminate, thereby arriving at the present invention.

[DESCRIPTION OF THE PREFERRED EMBODIMENTS]

A principal constituent layer of the multilayer stretched product comprises an aliphatic co-polyester (A), which consists of a copolymer having a glycolic acid unit represented by a formula(I) below:

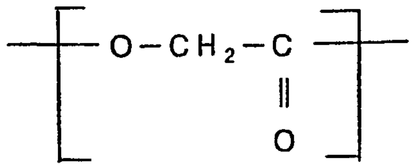

...... ( I )

as a recurring unit. The above-mentioned glycolic acid can be provided through polycondensation of glycolic acid, an alkyl glycolate ester or a glycolic acid salt, but may more preferably be provided by ring-opening polymerization of glycolide (GL) that is a cyclic diester of glycolic acid.

In addition to a glycolic acid monomer, such as the above-mentioned glycolide, another co-monomer may be used to provide an aliphatic co-polyester used in the present invention. Examples of the comonomer may include: cyclic monomers, inclusive of ethylene oxalate (i.e., 1,4-dioxane-2,3-dione); lactides; lactones, such as β -propiolactone, β-butyrolactone; pivalolactone, γ -butyrolactone, δ-valerolactone, β -methyl- δ -valerolactone, and ε-caprolactone; carbonates, such as trimethylene carbonate; ethers, such as 1,3-dioxane; ether-esters, such as dioxanone; and amides, such as ε-caprolactam; hydroxycarboxylic acids, such as lactic acid, 3-hydroxypropanoic acid, 3-hydroxybutanoic acid, 4-hydroxybutanoic acid and hydroxycaproic acid, and their alkyl esters; substantially equal molar mixtures of aliphatic diols, such as ethylene glycol and 1,4-butane diol with aliphatic dicarboxylic acids, such as succinic acid and adipic acid, and their alkyl or aromatic esters; and combinations of two or more species of such co-monomers. Thus, it is also possible to use a ternary or quarternary polymer. It is also possible to effect co-polymerization through transestrification by using oligomers or polymers instead of the corresponding comonomers as enumerated above.

Among the above, it is preferred to use, as the glycolic acid copolymer (A), a copolymer of at least two monomers coplymerizable with each other selected from the group consisting of glicolide (GL), lactide (LA; including optical isomers of L-lactide (LLA), D-lactide(DLA) and DL-lactide (DLLA)), trimethylene carbonate and caprolactone (CL). Particularly, a copolymer containing 99-70 wt.%, more preferably 99-80 wt.%, of the above-mentioned glycolic acid unit, so as to provide a desirable crystallization temperature and also preferable properties, inclusive of heat resistance, gas-barrier property and mechanical strength.

The glycolic acid copolymer (A) can also be a mixture of two or more species of copolymers comprising different constituent monomers or a mixture of two or more species of copolymers comprising identical constituent monomer species in different constituent ratios.

The glycolic acid copolymer (A) can also be a mixture of a copolymer with a homopoloymer of any one of the constituent monomers of the copolymer.

The above-mentioned mixing of two or more species of copolymers, or mixing of a homopolymer and a copolymer may be effected at any arbitrary ratios.

For example, the mixing of 50 wt. parts of PGA homopolymer and a PGA copolymer(PGA/PLLA=90/10) will provide a mixture having an overall composition similar to that of a PGA copolymer (PGA/PLLA=95/5). It is also possible to mix two species of copolymers having an identical or similar composition but having different molecular weights to provide a mixture having an overall composition which is similar to that of a copolymer (of, e.g., PGA/PLLA=98/2). It is also possible to mix a PGA homopolymer of a larger molecular weight with a smaller amount of a PGA copolymer of a smaller molecular weight, or reversely a PGA copolymer of a larger molecular weight with a smaller amount of a PGA homopolymer.

The former mixture of a homopolymer and a copolymer is expected to provide a better moisture resistance than a single species of copolymer having an identical overall composition. The latter mixture of two species of PGA copolymers, or a PGA copolymer and a PGA homopolymer, having mutually different molecular weights, is expected to provide a formed product with improved strength and moisture resistance by a PGA (co)polymer of a higher molecular weight while improving the formability and processability by a smaller amount of a PGA (co)polymer of a smaller molecular weight, so that either one thereof can be adopted depending on the usage of the formed product. For example, by mixing the (co)polymer of a smaller molecular weight in a proposition of below 50 wt.%, more preferably below 20 wt.%, particularly preferably ca.1 to 10 wt.%, it is possible to improve the strength and moisture resistance of a formed product, while ensuring the formability and processability of the product.

The mixing of two species of (co)polymers may be effected at the time of the forming or processing or may be effected at the time of pelletization to use the resultant pellets in the forming or processing.

The copolymerization for providing the aliphatic co-polyester (A) may preferably be performed by solution polymerization or bulk polymerization in the presence of a catalyst, examples of which may include: tin compounds,

inclusive of tin halides (such as tin dichloride and tin tetrachloride), and organic tin carboxylates, such as tin octanoate; titanium compounds, such as alkoxytitanate; aluminum compounds, such as alkoxyaluminium; and antimony compounds, such as antimony halides and antimony oxide. Particularly, the bulk polymerization may be effected by melt polymerization, solid state polymerization or a combination of these. It is further preferred to first proceed with polymerization in a molten state and then effect in the solid state, optionally further followed by molten state polymerization, for the purpose of increasing or adjusting the polymerization degree, or controlling the copolymer structure.

The polymerization temperature may be adjusted depending on the purpose in the range of 30 to 300 °C , preferably 60 to 250 °C , more preferably 100 to 220 °C, particularly preferably 150 to 180 °C. Too low a polymerization temperature tends to require a longer polymerization period, whereas too high a polymerization temperature is liable to result in a product copolymer which is colored or has a lower thermal stability or molecular weight.

According to the invention, among such aliphatic co-polyesters as described above, one having a crystallization temperature Tc1 of at least ca. 96 °C defined as a heat-evolution peak temperature due to crystallization detected in the course of heating from amorphous state at a temperature-raising rate of 10 °C/min. by means of a differential scanning calorimeter, is used as the aliphatic co-polyester (A). The Tc1 of the aliphatic co-polyester (A) is preferably in the range of ca.100 to 135 °C. As is understood from the former description, the crystallization temperature Tc1 is determined based on the composition of the aliphatic co-polyester as well as a contribution of a thermal history, particularly a maximum temperature (thermal history temperature), so far applied to the aliphatic co-polyester. In order to effect a standardized evaluation of the composition and contribution of thermal history so far applied, the crystallization temperature Tc1 of an aliphatic co-polyester used in the present invention may preferably be determined according to the following procedure.

A sample polyester is heated from 50 °C to a standard thermal history temperature of ca. 260 °C at a temperature-raising rate of 10 °C/min. and is held at that temperature for 2 minutes, followed by quenching rapidly (at a rate of ca. 100 °C/min.) with liquid nitrogen to be converted into amorphous state. Then, the resultant amorphous sample is subjected to re-heating in a nitrogen atmosphere from -50 °C at a temperature-raising rate of 10 °C/min. by using a differential scanning calorimeter (DSC) to measure a heat-evolution peak temperature due to crystallization detected in the course of the re-heating as the crystallization temperature Tc1. The crystallization energy (Δ Hc) can be determined from the peak area. On the other hand, to supplement other thermal properties of the aliphatic co-polyester, when the sample polyester is heated in a nitrogen atmosphere from 50 °C at a temperature-raising rate of 50 °C by means of DSC in the above-described manner, a heat-absorption peak temperature appearing on the heat capacity curve due to crystal melting is taken as a melting point Tm. Further, a heat-evolution peak temperature due to crystallization appearing in the course of cooling at a rate of 10 °C/min. from a molten state at the standard thermal history temperature(ca. 260 °C) in a nitrogen atmosphere by means of DSC is taken as a crystallization temperature Tc2. From the crystallization peak area, a melting enthalpy (Δ H) can be obtained. The aliphatic co-polyester (A) may preferably have a crystallization temperature Tc2 of at most ca.170 °C for the purpose of its melt forming. On the other hand, it is generally preferred that the Tm of the aliphatic co-polyester(A) is in the range of 130 to 225 °C.

Further, in order to provide the aliphatic co-polyester with a Tc1 of at least ca. 96 °C, preferably at least ca. 100 °C (and also with a Tc2 of at most ca. 170 °C or with no detectable Tc2), it is preferred to impart a thermal history of holding the copolymer in a range of ca. 210 °C to 280 °C for 2 to 30 minutes. The thermal history may preferably be imparted generally after the polymerization of the aliphatic co-polyester and before the formation of the laminate film, ordinarily during pelletization or a step before or after the pelletization. In the case of imparting the thermal history during the pelletization, the above-mentioned temperature may be imparted as setting temperature at the respective parts of an extruder, and the extruder outlet resin temperature may be slightly higher and correspond to ca. 250 to 260 °C.

Before or after imparting the thermal history, 0.003 to 3 wt. parts, preferably 0.005 to 1 wt. part, of a thermal stabilizer is added to 100 wt. parts of the aliphatic co-polyester(A). The thermal stabilizer may be selected from compounds functioning as anti-oxidants for polymers, and preferred examples thereof may include: phosphoric acid esters including a pentaerythrithol skeleton and represented by formula (II) below, phosphor compounds having at least one hydroxyl group and at least one long-chain alkyl ester group and represented by formula (III) below, and metal carbonate salts. These compounds may respectively be used singly or in combination of two or more species.

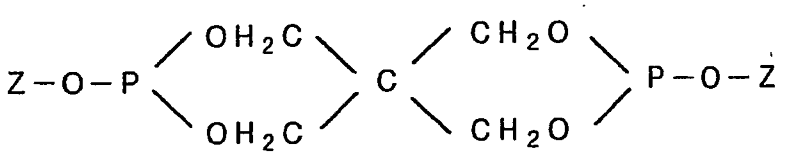 (II)

Z : alkyl or aryl

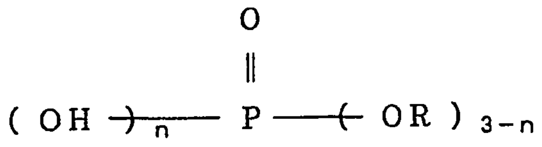

(III)

R : alkyl

According to the present invention, a layer of the above-mentioned glycolic acid copolymer (A) is directly laminated with a layer of a thermoplastic resin(B) which has a glass transition temperature Tg lower than Tc1 of the aliphatic co-polyester (A). Unless the relationship of Tg<Tc1 is satisfied, the co-stretching of the laminate of the layer (A) and the layer(B) becomes extremely difficult. It is preferred to satisfy the condition of Tc1-Tg≧ 25 °C , further preferably Tc1-Tg≧ 30 °C. The Tg of the thermoplastic resin (B) is in the range of ca. 64 to 120 °C. The Tg of the thermoplastic resin(B) (and also of the aliphatic co-polyester(A)) is determined as a secondary transition temperature (onset temperature) on a DSC curve in the course of heating from -50 °C at a temperature-raising rate of 10 °C/min. In order to provide a formed product of desired properties through co-stretching, the aliphatic co-polyester (A) may ordinarily be set to have a smaller layer thickness than the thermoplastic resin(B). It is also preferred that the aliphatic co-polyester (A) layer occupies at most 30 wt.%, more preferably at most 12 wt.%, of the total layers.

As far as the above-mentioned condition of Tg is satisfied, an arbitrary thermoplastic resin capable of lamination with the aliphatic co-polyester(A) layer as by extrusion lamination, dry lamination or wet lamination, coating, or co-extrusion with the aliphatic co-polyester(A), may be used as the thermoplastic resin(B).

More specifically, preferred examples of the thermoplastic resin (B) may include: polyester resins such as polyethylene terephthalate and polyethylene naphthalate, acrylic acid or methacrylic acid resins, nylon resins, sulfide resins such as polyphenylene sulfide, and carbonate resins. Among these, a polyester resin, particularly an aromatic polyester resin formed from a diol component and a dicarboxylic acid, of which at least one, preferably the dicarboxylic acid, is aromatic, is preferably used for providing a multilayer stretched product satisfying both transparency and gas-barrier property at levels desired depending on the intended use.

The multilayer stretched product according to the present invention including the aliphatic co-polyester (A) layer and the thermoplastic resin (B) layer may assume various product forms, inclusive of a film, a sheet, fiber, another extruded product, an injection molded product, and a blow molded product. The aliphatic co-polyester (A), particularly a PGA copolymer, has a relatively low moisture resistance, so that a laminate structure including a layer thereof not forming an outer surface layer is generally preferred. The film may preferably be provided as a stretched film or a heat-shrinkable film. The sheet may be formed into vessels, such as a tray and a cup, by sheet forming, such as vacuum forming or pressure forming. The blow molded products may include a blown vessel and a stretch-blown vessel. During such a forming process, the shaped product is stretched. The stretching may be either uniaxial or biaxial. The preferred degree of stretching varies depending on the use of the stretched product but may preferably be at least 4 times in terms of an areal ratio (or a factor of sectional area reduction in the case of a fibrous product), more preferably 6 to 25 times, particularly preferably 9 to 25 times, in view of the increase in strength, enhanced gas-barrier property, and improved moisture resistance, etc.

A stretched film may produced through a process wherein the aliphatic co-polyester (A) and the thermoplastic resin(B) are respectively melted and co-extruded into a sheet, which is then stretched while being cooled, or after cooling and optional re-heating, followed optionally by heat-setting. The heat-setting may preferably be performed at a temperature on the order of 40 to 210 °C below the melting point of the copolymer, more preferably in the range of the melting point minus 10 to minus 70 °C. At a higher proportion of the minor component in the copolymer, the heat-setting temperature can be lowered. The heat-setting temperature may properly be applied not only to films but also to other multilayer stretched products, such as bottles, vessels and the like. The film formation may be performed by melt-extrusion into a sheet by means of a flat die, such as a T-die, followed by uniaxial stretching, stepwise biaxial stretching or simultaneous biaxial stretching of the sheet as by using rollers, a tenter or a combination of these. Further, it is also possible to adopt a process including co-extrusion through a concentric annular die and biaxial stretching by inflation.

Further, in order to produce a laminate stretched film, it is also possible to apply laminate processing or coating in addition to the co-extrusion.

The laminate processing may include: wet lamination, dry lamination, extrusion lamination, hot melt lamination and non-solvent lamination.

In the case of lamination, by co-extrusion, it is preferred to dispose the aliphatic co-polyester (A) layer as an intermediate layer and dispose layers of other resins inclusive of the thermoplastic resin(B) as inner and outer layers. A preferred example of layer structure may be one including at least three layers of an outer thermoplastic resin (B) layer/an intermediate aliphatic co-polyester(A) layer/an inner thermoplastic resin(B) layer, with an adhesive layer optionally interposed between the respective layers. In the layer structure, the temperature relationship of Tc1(A)>Tg(B) according to the present invention is most suited for stretching after the co-extrusion. Further, as an outer layer or an inner layer, it is possible to dispose a layer of functionally excellent resin, such as a sealable resin, an impact-resistant or abuse-resistant resin, and a resin having excellent heat resistance (such as boiling resistance and retort resistance). The outer layer, the intermediate layer and the inner layer may respectively be disposed in plural layers, as desired.

Examples of laminate structures including the laminate processing may include those shown below.

1) outer layer/intermediate layer/inner layer,
2) outer layer/intermediate layer/moisture-resistant coating layer,
3) outer layer/intermediate coating layer/ moisture-resistant coating layer/inner layer,
4) moisture-resistant coating layer/outer layer/intermediate layer/inner layer,
5) moisture-resistant coating layer/outer layer/intermediate layer/moisture-resistant coating layer,
6) moisture-resistant coating layer/outer layer/intermediate layer/moisture-resistant coating layer/inner layer.

The outer layer, the intermediate layer and the inner layer may respectively assume a single-layer structure or a multi-layer structure. Of the above structures, the thermoplastic resin (B) layer as at least one layer of the outer layer and the inner layer and the aliphatic co-polyester (A) layer as (at least one layer of) the intermediate layer are laminated with each other by co-extrusion or by a laminate process are stretched, followed by lamination of the other layers, or stretched entirely together with the other layers, to form a multilayer stretched product of the present invention. Between the respective layers, an adhesive layer may be disposed as desired. Further, a vapor-deposition layer of a metal or a metal oxide, such as an aluminum vapor deposition layer, can be additionally disposed as desired as an outermost layer or an intermediate layer.

Among the multilayer stretched products of the present invention, those having a relatively small thickness (of at most ca. 250 μm, customarily) may be obtained as films having an improved strength through stretching.

A heat-shrinkable film may be obtained by applying no heat-setting to the stretched film or subjecting the stretched film to heat-setting under moderate conditions. Such a heat-shrinkable film may suitably be used as a packaging film and also as string materials such as split yarn.

A film-form product may be use as a film for packaging of foodstuffs, sundries, sanitary products, medical materials, industrial parts, electronic parts and precision instruments, or films for agricultural use. A packaging film can also be formed into bags or pouches. A flat film or a film obtained by slitting and spreading a wide inflation film can be formed into a tube as by center-seaming and then formed into bags. Further, a film can also be applied to an automatic packaging process wherein the film is formed into bags while being filled with content materials.

Among the multilayer stretched products, sheets having a relatively large thickness (of at least ca. 250μm, customarily) may be used as various packaging materials having a relatively large thickness. A sheet can be formed into trays having a relatively shallow drawing ratio, or vessls, such as cups, having a relatively deep drawing ratio. The necessary stretching effect required of the multilayer stretched product of the present invention can be provided in such a secondary forming step.

An injection molded product can be produced by laminating and injecting the aliphatic co-polyester (A) and the thermoplastic resin (B) from the respective injection machines into a common mold. Generally, a form of covering a layer of the aliphatic co-polyester (A) with a layer of the thermoplastic resin (B), is preferred. Examples of the injection molded products may include: daily miscellaneous materials (such as tableware, boxes and cases, hollow bottles, kitchenware, and plant pots), stationery, electrified materials (such as various cabinets), vessels for electric range and cup.

Fiber products may for example include: complex yarn, such as fishing lines, having a core layer of the aliphatic co-polyester (A) and a sheath layer of the thermoplastic resin(B).

Hollow shaped products may include: hollow containers, such as vessels (in a sense of including bottles), preferably a stretch-blown vessel, and trays. As a method of producing a stretch-blown vessel, a method disclosed in JP-A 10-337771 may for example be used. Also in this case, it is preferred to provide a multilayer stretched product form having at least three layers of outer layer/intermediate layer/inner layer with the intermediate layer formed of the aliphatic co-polyester(A) and the outer and inner layers formed of the thermoplastic resin(B). Heat-setting may be applied, as desired, similarly as in the above-mentioned stretched film. Further, it is possible to interpose an adhesive layer between the respective layers, while the multilayer stretch product of the present invention can be well formed through co-stretching even without such an intermediate adhesive layer.

Such hollow shaped products may for example be used as vessels for beverages, such as carbonated drinks, refreshing drinks, fruit drinks and mineral water; vessels for foodstuffs; vessels for seasonings, such as soy sauce, Worcestershire sauce, ketchup, mayonnaise, edible oil and mixtures of these; vessels for alcoholic drinks, such as beer, Japanese sake, whisky and wine; vessels for detergents and cleanser; vessels for cosmetics; vessels for agricultural chemicals; vessels for gasoline; and vessels for methanol.

More specifically, a vessel formed by disposing the aliphatic co-polyester (A) layer as an intermediate layer

and disposing on both sides thereof layers of the thermoplastic resin(B) comprising a high-density polyethylene optionally via an adhesive layer, may also be used as a portable gasoline tank. For uses requiring heat-resistance and transparency, it is possible to provide a vessel formed by disposing, on the both sides of the intermediate layer of the aliphatic co-polyester (A), layers of a polypropylene resin, such as propylene homopolymer or copolymer. Further, a vessel having a structure including at least three layers of aromatic polyester resin (B) / aliphatic co-polyester (A)/aromatic polyester resin(B) optionally together with another thermoplastic resin layer and/or an adhesive layer, is excellent in gas-barrier property and transparency, so that it is suitably used as a bottle for beverages, inclusive of carbonated drinks such as beer, and drinks containing, e.g., much vitamin C. A layer of the intermediate layers may be composed of a blend of the polyester resin (B) and the aliphatic co-polyester (A) and disposed as an additional layer. The recycle use of such a blend of the aliphatic co-polyester(A) and another thermoplastic resin co-extruded or co-injected together therewith as a part of the intermediate layer, a surface layer or an adhesive layer, is desirable for economization of resources and environmental consideration unless it results in a specific disadvantage in properties for the intended use.

In the above-mentioned various shaped products, it is also possible to incorporate a drying agent or a moisture absorbent. Further, it is possible to incorporate an anti-oxidant-containing layer in the multilayer product. For the adhesive layer optionally included in the multilayer product, it is possible to use various adhesives, inclusive of epoxidized polyolefin, as disclosed in, e.g.,EP-A 0925915.

[Examples]

Hereinbelow, the present invention will be described more specifically based on Examples and Comparative Examples.

(DSC measurement)

Thermal properties (Tc1, Tc2, Tm, Tg, Δ He, Δ H) were measured by using a differential scanning calorimeter ("TC10A", made by Mettler Instrumente AG). The measurement was performed in a nitrogen atmosphere by flowing dry nitrogen at a rate of 50ml/min. A sample in an amount of ca. 10mg was placed on an aluminum pan for the measurement in the formerly described manner.

<Example 1>

(Preparation of aliphatic co-polyester (A))

90 wt. parts of glycolide(GL), 10 wt. parts of L-lactide(LLA) and 0.003 wt. part of tin dichloride as catalyst, were charged as the polymerization starting materials and subjected to bulk polymerization at 170 °C for 24 hours, followed by cooling for more than 2 hours to recover the resultant copolymer.

The resultant copolymer was pulverized to an average particle size of 5mm or smaller and treated at 120 °C for 2 hours under a reduced pressure in a vacuum drier to remove the low-molecular weight volatile matter. Then, to 100 wt. parts of the thus-obtained aliphatic co-polyester, 0.03 wt. part of a phophite-type anti-oxidant (represented by the formerly described formula (II); "ADEKASTAP PEP8", made by Asahi Denka Kogyo K.K.) was added, and the resultant mixture was melted for a residence time of ca. 5 min. by a twin-screw type extruder ("LABO PLASTMILL" (made by Toyo Seiki Seisakusho K.K.) equipped with a 5mm-dia strand die) held at temperatures of 220-240 °C (ranging from the supply part: C1=220 °C, C2=230 °C, C3=240 °C, die=230 °C), and the extruded strand was air-cooled and cut into pellets of ca. 5mm in diameter and ca. 10mm in length.

The resultant pellets of PGA/PLLA(=90/10) copolymer exhibited DSC measurement results inclusive of Tm=211 °C, Tc1=134 °C (crystallization energy ΔHc=53 J/g), Tc2=122 °C (melting enthalpy Δ H=5 J/g), and Tg=37 °C)

(Stretch blow molding according to the cold parison method)

U-shaped parison molding: A multilayer injection molding apparatus ("FSD80S12ASE", made by Nissei Jushi Kogyo K.K.) including two injection molding machines and equipped with a character U-shaped mold for providing a preform of a stretch-blown bottle, was used to simultaneously inject polyethylene telephthalate ("TR-8550", made by Teijin K.K.; Tg=ca. 79 °C) for providing inner and outer layers through one injection molding machine and the above-obtained PGA/PLLA copolymer for providing a core layer through the other injection molding machine into the U-shaped mold (at 15 °C of the cooling water temperature) to form a U-shaped parison. The U-shaped parison exhibited a maximum thickness of 3.6 mm and a weight of ca. 22g. The PGA copolymer occupied 11 wt.% of the total weight of the U-shaped parison, and the resultant parison was transparent.

Blow molding: The above-prepared U-shaped parison was molded into a bottle by means of a stretch blow

molding machine (made by Frontier K.K.) while heating the U-shaped parison at 2 zones each giving a heating time of 60 sec. up to a surface temperature of ca. 95-105 °C immediately before the blow molding, whereby the blow molding was satisfactorily performed.

<Examples 2 and 3)

U-shaped parisons with 27 wt.% and 41 wt.%, respectively, of the PGA/PLLA copolymer content were prepared and subjected to blow molding in the same manner as in Example 1 except for changing the supply ratio between the polyethylene terephthalate and the PGA/PLLA copolymer.

Similarly as in Example 1, the obtained U-shaped parisons were transparent and could be satisfactorily blow-molded.

<Comparative Examples 1 and 2>

(Preparation of polyglycolic acid)

Polymerization was performed in the same manner as in Example 1 except for using 100 wt. parts of glycolide instead of 90 wt. parts of glycolide and 10 wt. parts of L-lactide, and the resultant polymer was pelletized to provide pellets of polyglycolic acid (PGA) showing the properties of: Tc1=95 °C (ΔHc=6 J/g), Tc2=173 °C(ΔH=83 J/g), Tm=221 °C and Tg=35 °C.

(Blow molding)

U-shaped parisons with 14 wt.% and 45 wt.%, respectively, of the PGA content, were prepared and subjected to blow molding in the same manner as in Example 1 except for using the above-prepared polyglycolic acid (PGA) instead of the PGA/PLLA copolymer and changing the supply ratio between the PGA and the polyethylene terephthalate.

In both cases, the resultant U-shaped parisons were somewhat turbid, and as a result of the blow molding, the parson with the PGA content of 14 wt.% (Comparative Example 1) provided a bottle, which however exhibited a thickness irregularity noticeably by hand touch. The parison with the PGA content of 45 wt.% (Comparative Example 2) failed in blow molding.

<Example 4)

Pellets of PGA/PLLA (=98/2) copolymer were prepared by polymerization in the same manner as in Example 1 except for using 98 wt. parts of glycolide and 2 wt. parts of L-lactide as the polymerization starting materials. The resultant copolymer exhibited thermal properties of: Tm=2 17 °C , Tc1=103 °C(ΔHc=58 J/g), Tc2=130 °C (ΔH=63 J/g), and Tg=36 °C.

A laminate U-shaped parison having a core copolymer layer at a ratio of 11 wt.% together with inner and outer layers of the polyethylene terephthalate was prepared and subjected to blow molding in the same manner as in Example 1 except for using the above-prepared PGA/PLLA (=98/2) copolymer pellets instead of the PGA/PLLA (=90/10) copolymer pellets.

The thus-obtained U-shaped parison was transparent and could be satisfactorily blow-molded.

<Example 5)

Pellets of PGA/PLLA(=80/20) copolymer were prepared by polymerization in the same manner as in Example 1 except for using 80 wt. parts of glycolide and 20 wt. parts of L-lactide as the polymerization starting materials. The resultant copolymer exhibited thermal properties of :

Tm=199 ℃, Tc1=134 ℃ (△Hc=8 J/g), Tc2: not detected, and Tg=37 ℃

A laminate U-shaped parison having a core copolymer layer at a ratio of 27 wt.% together with inner and outer layers of the polyethylene terephthalate was prepared and subjected to blow molding in the same manner as in Example 1 except for using the above-prepared PGA/PLLA (=80/20) copolymer pellets instead of the PGA/PLLA (=90/10) copolymer pellets.

The thus-obtained U-shaped parison was transparent and could be satisfactorily blow-molded.

<Example 6>

Pellets of PGA/PTMC (=90/10) copolymer were prepared by polymerization in the same manner as in Example 1 except for using 90 wt. parts of glycolide and 10 wt. parts of trimethylene carbonate (TMC) as the polymerization starting materials. The resultant copolymer exhibited thermal properties of: Tm=216 °C , Tc1=103 °C(ΔHc=58 J/g), Tc2=118 °C(ΔH=34 J/g), and Tg=26 °C.

A laminate U-shaped parison having a core copolymer layer at a ratio of 11 wt.% together with inner and outer layers of the polyethylene terephthalate was prepared and subjected to blow molding in the same manner as in Example 1 except for using the above-prepared PGA/PTMC (=90/10) copolymer pellets instead of the PGA/PLLA (=90/10) copolymer pellets.

The thus-obtained U-shaped parison was transparent and could be satisfactorily blow-molded.

<Example 7>

A laminate U-shaped parison was prepared and subjected to blow molding in the same manner as in Example 1 except for using mixture pellets formed by blending 50 wt.% of the pellets of PGA/PLLA (=90/10) copolymer obtained in Example 1 and 50 wt.% of polyglycolic acid (PGA) pellets prepared in Comparative Example 1. The above mixture pellets exhibited thermal properties of: Tm=219 °C, Tc1=98 °C(ΔHc=10 J/g), Tc2=165 °C(ΔH=75 J/g), and Tg=36 °C.

The thus-obtained U-shaped parison was transparent and could be satisfactorily blow-molded.

<Example 8>

(Stretch blow molding according to the hot parison method)

A multilayer injection molding apparatus ("ASB70DPHT", made by Nissei ASB Kikai K.K.) including two injection molding machines and equipped with a U-shaped preform mold and a stretch-blow bottle mold, was used to simultaneously inject polyethylene terephthalate ("BK-2170", made by Mitsubishi Kagaku K.K.; Tg=ca. 70 °C) for providing inner and outer layers through one injection molding machine and the PGA/PLLA (=90/10) copolymer prepared in Example 1 for providing a core layer through the other injection molding machine into the U-shaped preform mold (at 15 °C of the cooling water temperature) at a hot runner temperature of 270 °C to form a laminate U-shaped parison. The U-shaped parison exhibited a maximum thickness of 5.0 mm and a weight of ca. 185 g. The PGA copolymer occupied 10 wt.% of the U-shaped parison and the U-shaped parison was transparent. (injection step)

Successively, the U-shaped parison was subjected to stretch-blow molding according to the hot parison method including a uniform heating step of holding the parison for several seconds in a preheating vessel at 200-250 °C, a stretch blow step in a mold at 16 °C and a discharge step, whereby the possibility of a satisfactory blow molding was confirmed.

<Comparative Example 3>

(Stretch blow molding according to the hot parison method)

Stretch blow molding according to the hot parison method was performed in the same manner as in Example 8 except for using the polyglycolic acid obtained in Comparative Example 1 instead of the PGA/PLLA copolymer.

As a result, the U-shaped parison obtained after the injection step was colored and became opaque (crystallized) in the subsequent uniform heating step, thus failing to be blow-molded.

Further, the above-mentioned blow molding was tried while omitting the uniform heating step, whereby blow molding was similarly impossible.

[INDUSTRIAL APPLICABILITY]

As described above, according to the present invention, there is provided a satisfactory multilayer stretched product of a laminate structure including at least one layer of an aliphatic polyester resin, which is biodegradable and is also excellent in gas-barrier property and mechanical strength, in lamination with another thermoplastic resin.

## Claims

1. A multilayer stretched product, comprising: stretched layers including a layer of a glycolic acid copolymer (A) and a layer of a thermoplastic resin (B) directly laminated with the glycolic acid copolymer layer (A); wherein said glycolic acid copolymer (A) contains a thermal stabilizer and has a crystallization temperature Tc1 of at least 96 °C, said crystallization temperature Tc1 being defined as a heat-evolution peak temperature due to crystallization detected in the course of heating from amorphous state at a temperature-raising rate of 10 °C /min. by means of a differential scanning calorimeter, and said thermoplastic resin (B) has a glass-transition temperature Tg which is lower than the Tc1 and in the range of 64 to 120 °C.

2. A multilayer stretched product according to Claim 1, wherein the Tc1 of the glycolic acid copolymer (A) is at least. 100 °C.

3. A multilayer stretched product according to Claim 2, wherein the thermoplastic resin (B) comprises a polyester resin.

4. A multilayer stretched product according to any of Claims 1 to 3, wherein the crystallization temperature Tc1 of the glycolic acid copolymer (A) is. 100 to 135 °C.

5. A multilayer stretched product according to any of Claims 1 to 4, wherein the glycolic acid copolymer (A) exhibits a crystallization temperature Tc2 of at most. 170°C defined as a heat-evolution peak temperature due to crystallization detected in the course of cooling from a molten state at a temperature-lowering rate of 10 °C /min. by means of a differential scanning calorimeter.

6. A multilayer stretched product according to any of Claims 1 to 5, wherein the glycolic acid copolymer (A) is a copolymer of glycolide (GL) with at least one monomer of lactide (LA), trimethylene carbonate (TMC) and caprolactone (CL).

7. A multilayer stretched product according to any of Claims 1 to 6 wherein the layer of the glycolic acid copolymer (A) is disposed as an intermediate layer.

8. A multilayer stretched product according to Claim 7, wherein glycolic acid copolymer (A) layer is disposed as an intermediate layer between a pair of the thermoplastic resin (B) layers.

9. A multilayer stretched product according to Claim 8, wherein the thermoplastic resin (B) comprises a polyester resin.

10. A multilayer stretched product according to Claim 8 or 9, wherein the thermoplastic resin (B) comprises an aromatic polyester resin.

11. A multilayer stretched product according to any of Claims 1 to 10 assuming a form of hollow vessel.

12. A multilayer stretched product according to Claim 11, wherein the hollow vessel has been formed by blow molding.

13. A multilayer stretched product according to Claim 12, wherein the hollow vessel has been formed by blow molding according to a cold parison scheme.

14. A multilayer stretched product according to Claim 12, wherein the hollow vessel has been formed by blow molding according to a hot parison scheme.

15. A multilayer stretched product according to any of Claims 1 to 10, assuming a stretched laminate film.

16. A multilayer stretched product according to any of Claims 1 to 10, assuming a form of (deep) drawn container.

## Patentansprüche

1. Mehrlagiges, gestrecktes Produkt, umfassend: gestreckte Lagen, die eine Lage eines Glykolsäurecopolymers (A) und eine Lage eines thermoplastischen Harzes (B), die direkt mit der Glykolsäurecopolymerlage (A) laminiert ist, umfassen;

wobei besagtes Glykolsäurecopolymer (A) einen thermischen Stabilisator enthält und eine Kristallisationstemperatur Tc1 von mindestens 96 °C besitzt, wobei besagte Kristallisationstemperatur Tc1 als eine Wärmeentwicklungspeaktemperatur aufgrund Kristallisation definiert ist, die im Verlauf des Erhitzens vom amorphen Stadium bei einer Temperaturerhöhungsrate von 10 °C/min mittels eines Differenzialkalorimeters bestimmt wird, und wobei besagtes thermoplastisches Harz (B) eine Glasübergangstemperatur Tg besitzt, die niedriger als die Tc1 ist und im Bereich von 64 bis 120 °C liegt.

**2.** Das mehrlagige, gestreckte Produkt gemäß Anspruch 1, wobei die Tc1 des Glykolsäurecopolymers (A) mindestens 100 °C ist.

**3.** Das mehrlagige, gestreckte Produkt gemäß Anspruch 2, wobei das thermoplastische Harz (B) ein Polyesterharz umfasst.

**4.** Das mehrlagige, gestreckte Produkt gemäß einem der Ansprüche 1 bis 3, wobei die Kristallisationstemperatur Tc1 des Glykolsäurecopolymers (A) von 100 bis 135 °C ist.

**5.** Das mehrlagige, gestreckte Produkt gemäß einem der Ansprüche 1 bis 4, wobei das Glykolsäurecopolymer (A) eine Kristallisationstemperatur Tc2 von höchstens 170 °C aufweist, die als eine Wärmeentwicklungspeaktemperatur aufgrund Kristallisation definiert ist, die im Verlauf des Abkühlens vom geschmolzenen Stadium bei einer Temperaturniedrigungsrate von 10 °C/min mittels eines Differenzialkalorimeters bestimmt wird.

**6.** Das mehrlagige, gestreckte Produkt gemäß einem der Ansprüche 1 bis 5, wobei das Glykolsäurecopolymer (A) ein Copolymer aus Glykolid (GL) mit mindestens einem Monomer von Laktid (LA), Trimethylencarbonat (TMC) und Caprolakton (CL) ist.

**7.** Das mehrlagige, gestreckte Produkt gemäß einem der Ansprüche 1 bis 6, wobei die Lage des Glykolsäurecopolymers (A) als eine Zwischenlage angeordnet ist.

**8.** Das mehrlagige, gestreckte Produkt gemäß Anspruch 7, wobei die Glykolsäurecopolymerlage (A) als eine Zwischenlage zwischen einem Paar der thermoplastischen Harzlagen (B) angeordnet ist.

**9.** Das mehrlagige, gestreckte Produkt gemäß Anspruch 8, wobei das thermoplastische Harz (B) ein Polyesterharz umfasst.

**10.** Das mehrlagige, gestreckte Produkt gemäß Anspruch 8 oder 9, wobei das thermoplastische Harz (B) ein aromatisches Polyesterharz umfasst.

**11.** Das mehrlagige, gestreckte Produkt gemäß einem der Ansprüche 1 bis 10, das die Form eines Hohlkörpers annimmt.

**12.** Das mehrlagige, gestreckte Produkt gemäß Anspruch 11, wobei der Hohlkörper durch Blasformen gebildet worden ist.

**13.** Das mehrlagige, gestreckte Produkt gemäß Anspruch 12, wobei der Hohlkörper durch Blasformen mit einer kalten Blasform (cold parison scheme) gebildet worden ist.

**14.** Das mehrlagige, gestreckte Produkt gemäß Anspruch 12, wobei der Hohlkörper durch Blasformen mit einer heißen Blasform (hot parison scheme) gebildet worden ist.

**15.** Das mehrlagige, gestreckte Produkt gemäß einem der Ansprüche 1 bis 10, das die Form einer gestreckten Laminatfolie annimmt.

**16.** Das mehrlagige, gestreckte Produkt gemäß einem der Ansprüche 1 bis 10, das die Form eines (tief)gezogenen Behälters annimmt.

## Revendications

**1.** Produit multicouche étiré, comprenant des couches étirées comportant une couche d'un copolymère d'acide glycolique (A) et une couche de résine thermoplastique (B) directement stratifiée avec la couche copolymère d'acide glycolique (A) ;
dans lequel ledit copolymère d'acide glycolique (A) contient un stabilisateur thermique et a une température de cristallisation Tc1 d'au moins 96 °C, ladite température de cristallisation Tc1 étant définie comme une température de pic de dégagement de chaleur due à la cristallisation détectée au cours du chauffage depuis l'état amorphe à une cadence d'augmentation de la température de 10 °C/min à l'aide d'un calorimètre à balayage différentiel et ladite résine thermoplastique (B) a une température de transition vitreuse Tg qui est inférieure à Tc1 et se situe dans la plage de 64 à 120 °C.

**2.** Produit multicouche étiré selon la revendication 1, dans lequel la Tc1 du copolymère d'acide glycolique (A) est d'au moins 100 °C.

**3.** Produit multicouche étiré selon la revendication 2, dans lequel la résine thermoplastique (B) comprend une résine de polyester.

**4.** Produit multicouche étiré selon l'une quelconque des revendications 1 à 3, dans lequel la température de cristallisation Tc1 du copolymère d'acide glycolique (A) est de 100 à 135 °C.

**5.** Produit multicouche étiré selon l'une quelconque des revendications 1 à 4, dans lequel le copolymère d'acide glycolique (A) présente une température de cristallisation Tc2 au maximum de 170 °C, définie comme une température de pic de dégagement de chaleur due à une cristallisation détectée au cours du refroidissement depuis l'état fondu à une cadence de réduction de la température de 10 °C /min à l'aide d'un calorimètre à balayage différentiel.

**6.** Produit multicouche étiré selon l'une quelconque des revendications 1 à 5, dans lequel le copolymère d'acide glycolique (A) est un copolymère de glycolide (GL) avec au moins un monomère de lactide (LA), de carbonate de triméthylène (TMC) et de caprolactone (CL).

**7.** Produit multicouche étiré selon l'une quelconque des revendications 1 à 6, dans lequel la couche du copolymère d'acide glycolique (A) est disposée comme couche intermédiaire.

**8.** Produit multicouche étiré selon la revendication 7, dans lequel la couche de copolymère d'acide glycolique (A) est disposée comme couche intermédiaire entre une paire de couches de résine thermoplastique (B).

**9.** Produit multicouche étiré selon la revendication 8, dans lequel la résine thermoplastique (B) comprend une résine de polyester.

**10.** Produit multicouche étiré selon la revendication 8 ou 9, dans lequel la résine thermoplastique (B) comprend une résine de polyester aromatique.

**11.** Produit multicouche étiré selon l'une quelconque des revendications 1 à 10 adoptant la forme d'un récipient creux.

**12.** Produit multicouche étiré selon la revendication 11, dans lequel le récipient creux a été formé par moulage par soufflage.

**13.** Produit multicouche étiré selon la revendication 12, dans lequel le récipient creux a été formé par moulage par soufflage selon un schéma d'ébauche à froid.

**14.** Produit multicouche étiré selon la revendication 12, dans lequel le récipient creux a été formé par moulage par soufflage selon un schéma d'ébauche à chaud.

**15.** Produit multicouche étiré selon l'une quelconque des revendications 1 à 10, adoptant un film stratifié étiré.

**16.** Produit multicouche étiré selon l'une quelconque des revendications 1 à 10, adoptant la forme d'un réservoir embouti (profond).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5853639 A
- US 6245437 A
- EP 0925915 A
- EP 806283 A
- JP 2002007839 A
- JP 10337771 A